# EUROPEAN PATENT SPECIFICATION

(11) **EP 1 496 594 B1**
(45) Date of publication and mention of the grant of the patent: **22.03.2006**
(21) Application number: 04013207.8
(22) Date of filing: 04.06.2004
(51) Int. Cl.: H02J 9/06

(54) **Electronic power supply for an emergency lighting with fluorescent lamp**
Elektronische Stromversorgung für die Notbeleuchtung mit Leuchtstofflampe
Alimentation de puissance electronique d'éclairage de secours avec lampe fluorescente

(30) Priority: 10.07.2003 IT MI20031409
(43) Date of publication of application: 12.01.2005
(73) Proprietor: E.R.C. Elettro Radio Costruzioni S.p.A., 23801 Calolziocorte (Lecco) (IT)
(72) Inventor: Borsani, Luigi, 23900 Lecco (IT); Ferrando, Giuseppe, 20052 Monza (Milano) (IT)
(74) Representative: Petruzziello, Aldo

(56) References cited:
- EP-A- 0 813 285
- EP-A- 1 202 429
- CA-A- 2 414 543
- US-A- 4 945 280
- US-A- 4 977 351
- US-A- 5 029 061
- US-A- 5 252 891
- US-A- 6 087 787

## Description

The present invention refers to an electronic power supply for an emergency system to supply power to a fluorescent light.

An emergency system for lighting with permanent light provides the possibility of supplying power to a fluorescent light directly from the mains network when said mains network is present and from an emergency battery when said mains network is absent.

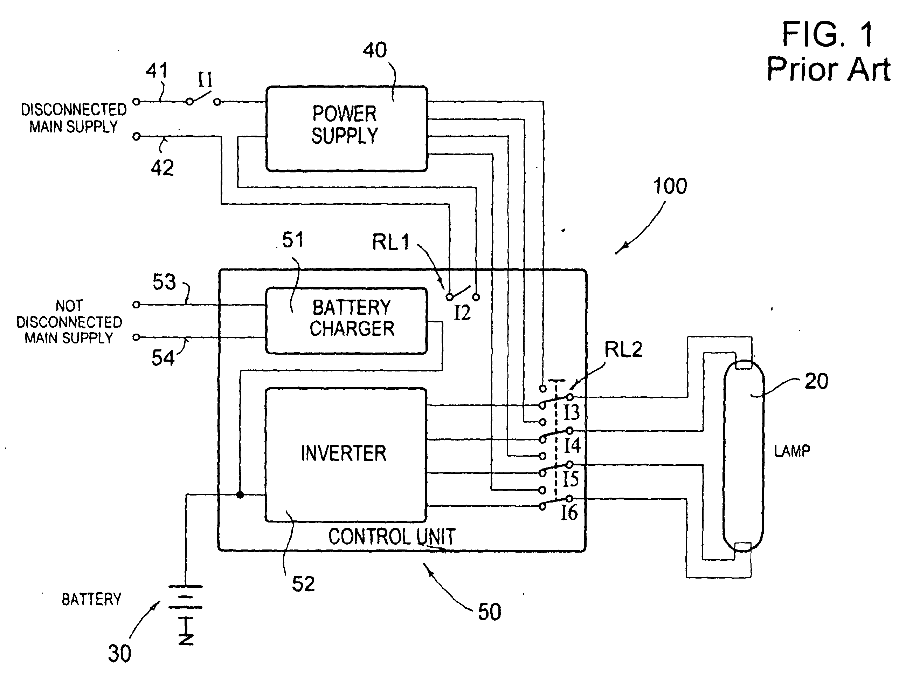

Figure 1 shows a circuit block diagram of an emergency system according to the prior art, denoted as a whole with reference numeral 100, designed to supply power to a fluorescent light denoted by 20.

The emergency system 100 comprises a normal electronic power supply 40 for fluorescent lights, a control unit 50 and an emergency battery 30.

The control unit 50 comprises a first relay RL1, a second relay RL2, a battery-charger 51 and an inverter 52.

The electronic power supply 40 is connected to the mains network by means of the two line conductors (41, 42). A switch It controll ed by an external switching control is inserted on the line conductor 41.

The relay RL1 has a contact 12 disposed on the other line conductor 42 or in series with the line conductor 41. Thus, when the externally controlled switch I1 is closed, the relay RL1 can commutate from a situation in which the power supply 40 is connected to the mains network to a situation in which the power supply 40 is disconnected from the mains network.

The relay RL2 has four switching contacts 13, 14, 15 and 16 connected to the four terminals of the cathodes of the light 20. The switching contacts 13, 14, 15 and 16 can commutate from a position in which they connect the four outputs of the power supply 40 to the cathodes of the light 20 to a position in which they connect the four outputs of the inverter 52 to the cathodes of the light 20.

The input of the battery-charger 51 is connected to the mains network by means of two conductors (53, 54), whilst the output of the battery-charger 51 is connected to the battery 30. The battery 30 is in tum connected to the input of the inverter 52.

The electronic power supply 40 receives power from the mains network by means of the line (41, 42), defined as "interrupted". Said line (41, 42) is in fact interrupted by means of the switch 11 of the external switching control to switch the light 20 on or off when the mains network is present, the contact 12 of the relay RL1 of the control unit 50 is closed and the switching contacts 13 - 16 of the relay RL2 are positioned to connect the light 20 to the electronic power supply 40.

The control unit 50 receives power from the mains network through the line (53, 54), defined as "not interrupted". Said line (53, 54) is in fact always present when the mains network is present. In this case the relay RL1 connects the power supply 40 to the mains network and the relay RL2 connects the power supply 40 to the light 20 so that the light 20 is powered by the electronic power supply 40.

Should the mains network - and thus both the "interrupted" line (41, 42) and the "not interrupted" line (53, 54) - fail, the relay RL2 commutates the light 20 onto the inverter 52 which, receiving power from the external battery 30, supplies power to the light 20. In this situation the relay RL1 opens to prevent the electronic power supply 40 from being powered, without the light 20 connected to its output terminals, during the transient state when the mains network lacks or returns.

The control unit 50 further comprises the battery-charger 51 which, when the mains network is present, restores the charge of the battery 30 and keeps it charged.

In a lighting system for a permanent light, as described above, the light 20 normally works at full brightness when operates from the mains network (operation with the mains network present) and at reduced brightness when operates in the absence of the mains network (emergency operation). This is in order to ensure the lighting for a certain time, even with a battery of limited capacity.

Such an emergency system according to the prior art has various drawbacks due to the presence of a large number of devices and circuit components which sometimes prove to be excessively bulky and which make the system costly and complex to assemble.

US 5 029 061 discloses an emergency lighting system comprising a single output stage for supply a fluorescent tube both by mains and by battery.

The object of the present invention is to overcome the drawbacks of the prior art by providing an electronic power supply that is able to supply power to a fluorescent light directly from the mains network, when the mains network is present, and from an emergency battery when the mains network is absent.

Another object of the present invention is to provide an electronic power supply for fluorescent lights that is efficient and able to ensure perfect operation of the light even in the absence of the mains network.

Yet another object of the present invention is to provide an electronic power supply for fluorescent lights that is inexpensive and simple to produce.

According to the invention, these objects are achieved with the characteristics listed in appended independent claim 1.

Advantageous embodiments of the invention are apparent from the dependent claims.

The electronic power supply for the emergency supply system of a fluorescent light according to the invention comprises a single output stage to power the fluorescent light in operation both from the mains network and from the battery.

The provision of a single output stage allows the switching relays used in emergency systems of the prior art to be eliminated, with the result of having a simpler and more compact device.

Further characteristics of the invention will be made clearer by the detailed description that follows, referring to a purely exemplifying and therefore nonlimiting embodiment thereof, illustrated in the appended drawings, in which:
- Figure 1 is a block diagram of an emergency lighting system for permanent light according to the prior art; and
- Figure 2 is a block diagram of an electronic power supply for fluorescent lights according to the invention.

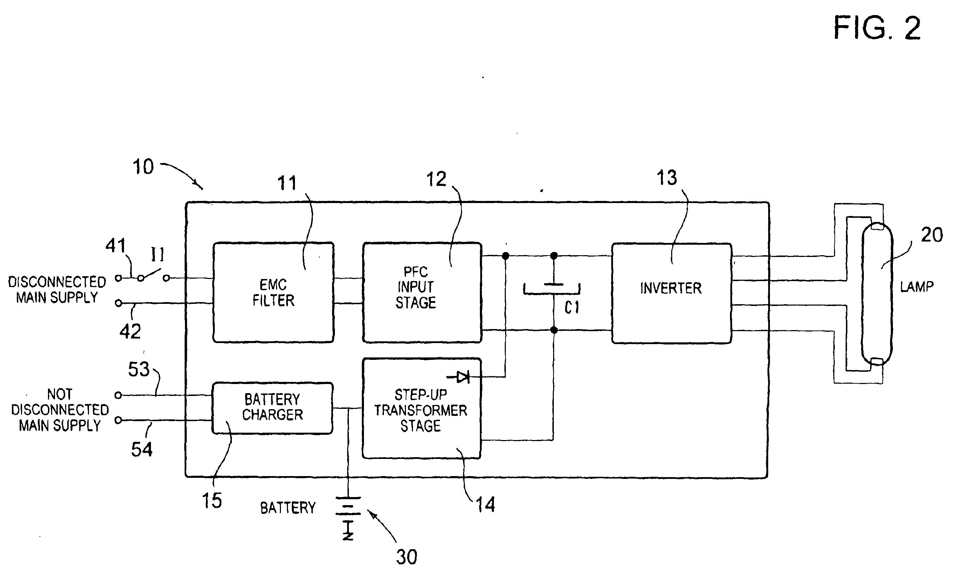

In Figure 2 the electronic power supply according to the invention, designated as a whole with reference numeral 10, is described.

The power supply 10 comprises an input filter 11, an input stage 12, an output stage 13, a battery-charger 15 and a voltage raising stage 14.

The mains network is connected to the input of the input filter 11 by means of two line conductors (41, 42). An external switch 11 is inserted in series with the conductor 41 of the "interrupted" mains network.

The input filter 11 is preferably an EMC mains filter to suppress noises coming from the mains network. The EMC filter is connected to the input stage 12. The input stage 12 can consist of a simple rectifying bridge or of a PFC (Power Factor Corrector) stage.

Between the input stage 12 and the output stage 13 there is a filter condenser C1. The output stage 13 is an inverter output stage which has four outputs connected to the four terminals of the cathodes of a fluorescent light 20.

The battery-charger 15 is connected to the "not interrupted" mains network by means of two line conductors (53, 54). The output of the battery-charger 15 is connected to a battery 30 disposed outside the power supply 10. The battery is in turn connected to the voltage raising stage 14 belonging to the power supply 10. The output of the voltage raising stage 14 is connected to the ends of the charging condenser C1 at the input to the inverter output stage 13.

When the mains network is present, the "not interrupted" line (53, 54) is present and - if the "interrupted" line (41, 42) is powered by closing the switch 11 - the condenser C1 is charged at a direct voltage between 300V and 400V by the input stage 12 through the filter EMC 11.

The output stage 13 takes the power from the condenser C1 and supplies the fluorescent light 20 with a sinusoidal waveform at high frequency (above 20 KHz) similarly to what happens in an electronic power supply of the prior art.

In such a situation voltage is also present on the "not interrupted" line (53, 54), thus the battery-charger 15 keeps the battery 30 charged.

When the mains network fails and thus there is no voltage both on the "interrupted" line (41, 42) and on the "not interrupted" line (53, 54), the condenser C1 is kept charged by the voltage raising stage 14 which is activated and which takes power from the battery 30.

In the power supply 10 according to the invention, it is possible to reduce in two ways the brightness of the light 20 when it is supplied by the battery 30: by operating on the voltage at the ends of the condenser C1 or by changing the working frequency of the output stage 13. In both cases, the output stage 13 will transfer less power to the light 20.

The electronic power supply 10 according to the invention has the following advantages with respect to the emergency system 100 according to the prior art illustrated in Figure 1.

In the power supply 10 no switching relay is needed to connect the light 20 in a different manner during the mains operation and the battery operation.

In the passage from the mains operation to the battery operation and vice versa it is not necessary to control the "interrupted" line (41, 42) - as happens with the relay RL1 of the system of Figure 1 - as the condenser C1 is always supplied either by the input stage 12 or by the voltage raising stage 14.

The power sent to the light 20 during the emergency operation can be easily regulated either through the voltage raising stage 14 or by acting on the frequency of the output stage 13.

## Claims

1. An electronic power supply (10) for an emergency system for supplying power to a fluorescent light (20) comprising a single output stage (13) to supply the fluorescent light (20) when it is operated both by the mains network and by the battery (30) **characterised in that** at the input of said output stage (13) there is disposed a filter condenser (C1) which, in the absence of the supply from the interrupted mains network, is kept charged by the battery (30) through a voltage raising stage (14).

2. An electronic power supply according to claim 1, **characterised in that** said output stage is an inverter stage (13) that takes power from a filter condenser (C1).

3. An electronic power supply according to claim 1 or 2, **characterised in that** the output stage (13) is supplied by the interrupted mains network,through an externally controlled switch (I1), an EMC network filter (11), an input stage (12) and a filter condenser (C1).

4. An electronic power supply according to any one of the preceding claims, **characterised in that** the brightness of the light (20) during emergency operation is adjusted by varying the voltage on said charge condenser (C1).

5. An electronic power supply according to any one of the preceding claims, **characterised in that** the brightness of the light (20) during the emergency operation is adjusted by varying the working frequency of said output stage (13).

6. An electronic power supply according to any one of the preceding claims, **characterised by** comprising the EMC network filter (11) to suppress noises coming from the mains supply.

7. An electronic power supply according to any one of the preceding claims, **characterised by** comprising a rectifying bridge input stage to supply power to the inverter stage (13).

8. An electronic power supply according to any one of claims 1 to 6, **characterised by** comprising a Power Factor Corrector input stage to supply power to the inverter stage (13).

9. An electronic power supply according to any one of the preceding claims, **characterised by** comprising a battery-charger (15) connected between the mains network and said battery (30) to recharge it and keep it charged.

## Patentansprüche

1. Elektronische Stromversorgung (10) für ein Notsystem zum Liefern von Strom zu einem Fluoreszenzlicht (20), umfassend eine einzelne Ausgangsstufe (13), um das Fluoreszenzlicht (20) zu versorgen, wenn es sowohl durch das Netzstromversorgungsnetz als auch durch die Batterie (30) betrieben wird, **dadurch gekennzeichnet, dass** am Eingang der Ausgangsstufe (13) ein Filterkondensator (C1) angeordnet ist, der bei Abwesenheit der Stromversorgung vom unterbrochenen Netzstromversorgungsnetz von der Batterie (30) über eine Spannungserhöhungsstufe (14) geladen gehalten wird.

2. Elektronische Stromversorgung nach Anspruch 1, **dadurch gekennzeichnet, dass** die Ausgangsstufe eine Umkehrstufe (13) ist, die Strom von einem Filterkondensator (C1) nimmt.

3. Elektronische Stromversorgung nach Anspruch 1 oder 2, **dadurch gekennzeichnet, dass** die Ausgangsstufe (13) vom unterbrochenen Netzstromversorgungsnetz über einen extern gesteuerten Schalter (11), ein EMV-Netzfilter (11), eine Eingangsstufe (12) und einen Filterkondensator (C1) versorgt wird.

4. Elektronische Stromversorgung nach einem der vorhergehenden Ansprüche, **dadurch gekennzeichnet, dass** die Helligkeit des Lichts (20) während des Notbetriebs durch Verändern der Spannung am Ladungskondensator (C1) reguliert wird.

5. Elektronische Stromversorgung nach einem der vorhergehenden Ansprüche, **dadurch gekennzeichnet, dass** die Helligkeit des Lichts (20) während des Notbetriebs durch Verändern der Arbeitsfrequenz der Ausgangsstufe (13) reguliert wird.

6. Elektronische Stromversorgung nach einem der vorhergehenden Ansprüche, **dadurch gekennzeichnet, dass** sie das EMV-Netzfilter (11) umfasst, um Rauschen, das von der Netzstromversorgung stammt, zu unterdrücken.

7. Elektronische Stromversorgung nach einem der vorhergehenden Ansprüche, **dadurch gekennzeichnet, dass** sie eine Gleichrichterbrücken-Eingangsstufe umfasst, um Strom zur Umkehrstufe (13) zu liefern.

8. Elektronische Stromversorgung nach einem der Ansprüche 1 bis 6, **dadurch gekennzeichnet, dass** sie eine Leistungsfaktorkorrektor-Eingangsstufe umfasst, um Strom zur Umkehrstufe (13) zu liefern.

9. Elektronische Stromversorgung nach einem der vorhergehenden Ansprüche, **dadurch gekennzeichnet, dass** sie eine Batterieladevorrichtung (15) umfasst, die zwischen dem Netzstromversorgungsnetz und der Batterie (30) angeschlossen ist, um diese wiederaufzuladen und geladen zu halten.

## Revendications

1. Système électronique d'alimentation en courant (10) pour système d'urgence pour la fourniture de courant à une lampe fluorescente (20), comprenant un seul étage de sortie (13) pour alimenter la lampe fluorescente (20) lorsqu'elle est actionnée à la fois par le réseau et par la pile (30), **caractérisé en ce qu'**à l'entrée dudit étage de sortie (13) est disposé un condensateur de filtrage (C1) qui, en l'absence d'alimentation de la part du réseau principal interrompu, est maintenu chargé par la pile (30) par un étage d'élévation de tension (14).

2. Système électronique d'alimentation en courant selon la revendication 1, **caractérisé en ce que** ledit étage de sortie est un étage inverseur (13) qui prend le courant dans un condensateur de filtrage (C1).

3. Système électronique d'alimentation en courant selon la revendication 1 ou 2, **caractérisé en ce que** l'étage de sortie (13) est alimenté par le réseau principal interrompu par un commutateur contrôlé de l'extérieur (I1), un filtre de réseau CEM (11), un étage d'entrée (12) et un condensateur de filtrage (C1).

4. Système électronique d'alimentation en courant selon l'une quelconque des revendications précédentes, **caractérisé en ce que** la luminosité de la lumière (20) pendant le fonctionnement d'urgence est ajustée en variant la tension sur ledit condensateur de charge (C1).

5. Système électronique d'alimentation en courant selon l'une quelconque des revendications précédentes, **caractérisé en ce que** la luminosité de la lumière (20) pendant le fonctionnement d'urgence est ajustée en variant la fréquence opératoire dudit étage de sortie (13).

6. Système électronique d'alimentation en courant selon l'une quelconque des revendications précédentes, **caractérisé en ce qu'**il comprend le filtre de réseau CEM (11) afin de supprimer les bruits provenant de l'alimentation du réseau.

7. Système électronique d'alimentation en courant selon l'une quelconque des revendications précédentes, **caractérisé en ce qu'**il comprend un étage d'entrée de pont de rectification pour fournir du courant à l'étage inverseur (13).

8. Système électronique d'alimentation en courant selon l'une quelconque des revendications 1 à 6, **caractérisé en ce qu'**il comprend un étage d'entrée de correcteur de facteur de courant pour fournir du courant à l'étage inverseur (13).

9. Système électronique d'alimentation en courant selon l'une quelconque des revendications précédentes, **caractérisé en ce qu'**il comprend un chargeur de pile (15) connecté entre le réseau et ladite pile (30) pour la recharger et la garder chargée.
